# FASCICULE DE BREVET EUROPEEN

(11) **EP 4 267 419 B1**
(45) Date de publication et mention de la délivrance du brevet: **01.04.2026**
(21) Numéro de dépôt: 21840649.4
(22) Date de dépôt: 01.12.2021
(51) Int. Cl.: B60K 1/04, B62D 21/15, B62D 25/20

(54) **STRUCTURE DE SOUBASSEMENT POUR VÉHICULE AUTOMOBILE**
UNTERBODENSTRUKTUR FÜR EIN KRAFTFAHRZEUG
UNDERBODY STRUCTURE FOR A MOTOR VEHICLE

(30) Priorité: 23.12.2020 FR 2013996
(43) Date de publication de la demande: 01.11.2023
(73) Titulaire: Stellantis Auto SAS, 78300 Poissy (FR)
(72) Inventeur: FONFREDE, Stephane, 90000 Belfort (FR); JI, Jindong, Shanghai 200233 (CN)
(74) Mandataire: BCIP
(86) Numéro de dépôt international: PCT/FR2021/052159
(87) Numéro de publication internationale: WO 2022/136755

(56) Documents cités:
- EP-A1- 2 805 875
- WO-A1-2013/053433
- FR-A1- 3 024 421

## Description

La présente invention revendique la priorité de la demande française 2013996 déposée le 23 décembre 2020.

La présente invention concerne généralement le domaine des structures de soubassement pour véhicules et notamment pour véhicules automobiles.

La réalisation d'une structure de soubassement de véhicule, et notamment de véhicule automobile, doit satisfaire à de nombreuses prestations notamment des tests de chocs.

Un exemple de test mesure la résistance d'un véhicule à un choc latéral de type « choc poteau ». Dans ce test, un véhicule est monté sur une plateforme lancée à 32 km/h avec un angle de choc de 75° par rapport à la direction longitudinale du véhicule. Le véhicule est positionné de façon à ce qu'il percute un poteau au niveau du siège avant conducteur. La déformation de l'habitacle engendrant des risques importants de blessures, notamment au niveau du thorax ou de l'abdomen, le test vise à évaluer l'amplitude de la déformation du plancher.

En cas de choc latéral de type « choc poteau », une partie des efforts résultant du choc transite par la structure de soubassement. Une structure de soubassement est généralement composée d'un plancher qui s'étend entre au moins deux longerons longitudinaux disposés de chaque côté du véhicule.

La structure de soubassement comprend communément deux traverses dites d'assise, dont une traverse d'assise avant et une traverse d'assise arrière, sur lesquelles peuvent être fixées par exemple les glissières de support pour les sièges du véhicule. Les traverses sont généralement des corps creux dimensionnés et agencés de manière à se déformer en dissipant l'énergie du choc et protéger les passagers. On comprend que les traverses jouent un rôle particulier dans la maitrise globale d'un scénario de choc latéral ou choc poteau.

Dans le cadre d'un véhicule électrique ou d'un véhicule hybride électrique, la structure de soubassement soutient en outre le bloc de batterie de propulsion du véhicule. Le bloc de batterie est de forme sensiblement parallélépipédique et souvent disposé sous le plancher, au niveau des sièges avant. Le plancher comporte une partie surélevée centrale permettant d'accueillir le bloc de batterie de propulsion.

Le bloc de batterie de propulsion d'un véhicule électrique pose un problème notamment lors d'un choc latéral. En effet, la déformation de la structure de soubassement lors d'un choc latéral est susceptible d'engendrer une intrusion dans le bloc de batterie de propulsion situé au centre du plancher. Il y a alors un risque de d'électrocution ou de brulures chimiques pour les passagers.

De plus, le bloc de batterie réduit l'espace disponible pour le passage des traverses qui permettent de limiter la déformation du plancher pendant un choc latéral. Des traverses de section plus petites offrent une moins bonne rigidité et donc une moins bonne protection en cas de choc latéral, à la fois pour la batterie, et pour les passagers.

On connait des solutions pour assurer l'absorption des chocs latéraux dans des véhicules utilisant des batteries de propulsions situées sous la plancher, comme par exemple dans le document WO2019/162583. Ce dernier décrit un véhicule de type électrique ou hybride électrique comprenant une structure de soubassement avec des longerons, et une batterie de propulsion logée dans un boitier de batterie. La structure comprend en outre un dispositif de protection de batterie en cas de choc latéral. Le véhicule se distingue en ce que le dispositif de protection comprend au moins une barre longitudinale disposée de manière à s'étendre sur au moins une des faces latérales du boîtier de batterie et à être interposé entre le boîtier du bloc de batterie et les longerons de la structure.

Le document FR3063683 décrit un véhicule automobile de type hybride ou électrique, comprenant des éléments de structure latérale ou longerons, une batterie de propulsion munie d'un carter ayant des faces latérales disposées en regard des longerons de la structure et un dispositif de protection de ladite batterie. Le dispositif de protection comprend au moins une barre longitudinale disposée de manière à s'étendre sur au moins une des faces latérales du boîtier de batterie et à être interposé entre le boîtier du bloc de batterie et les éléments du côté véhicule structure.

Le document US20200031399 décrit une structure de soubassement de véhicule automobile pourvue d'un face de plancher, d'une paire de longerons latéraux, d'une batterie, d'une paire de cadre latéraux gauche et droit, d'une traverse, d'un élément d'absorption des chocs et d'un élément de renforcement. L'élément d'absorption des chocs est disposé sur le côté de la surface inférieure du panneau de plancher sous la traverse dans la direction avant-arrière de la carrosserie du véhicule, et s'étend dans la direction transversale du véhicule entre les longerons et les cadre latéraux. Le bloc de batterie de propulsion est logé entre les cadres latéraux qui forment des barres de protection supplémentaires pour celle-ci.

La solution divulguée dans ce dernier document montre un agencement complexe et couteux pour l'absorption des chocs latéraux et la protection d'une batterie de propulsion.

Le document US20180334022 décrit un système d'absorption et de répartition d'un impact latéral dans un bloc batterie. Ce dernier inclut plusieurs traverses agencées transversalement, permettant l'absorption et la distribution de la charge reçue en cas de choc latéral. Dans ce document, les traverses sont disposées dans le bloc batterie et ont la double fonction de créer une isolation thermique entre les éléments de batterie et absorber des chocs latéraux. Cette solution suppose la modification complète d'un bloc de batterie de manière à y insérer des traverses.

Le document FR3024421 décrit un plancher de véhicule comportant deux traverses dont l'une des extrémités reliées à un longeron et comporte une zone déformable.

L'objet de la présente invention est de répondre à au moins un des problèmes et/ou inconvénients mentionnés plus haut. En particulier, l'invention a pour objectif de proposer une structure de soubassement pour un véhicule comprenant une batterie de propulsion, qui soit peu complexe et permette une absorption des chocs améliorée en cas de choc latéral.

A cet effet et selon un premier aspect, l'invention concerne une structure de soubassement pour un véhicule automobile, la structure de soubassement comprenant, un plancher, et au moins deux longerons longitudinaux disposés respectivement de chaque côté du plancher; le plancher comprenant une partie surélevée sous laquelle est destiné à être monté un bloc de batterie de propulsion ; la structure de soubassement comprenant en outre au moins une traverse disposée au-dessus du plancher, et fixée aux longerons par ses extrémités.

La structure de soubassement est remarquable en ce qu'au moins une traverse comprend une zone rigide s'étendant transversalement sur au moins la largeur de la partie surélevée du plancher ; et des zones déformables en compression en cas de choc au niveau de chaque extrémité de la traverse, chaque zone déformable en compression comprenant des moyens favorisant sa déformation. Au moins une traverse comprend une partie supérieure s'étendant au-dessus de la partie surélevée, et une partie inférieure disposée au niveau de chaque extrémité de la traverse, les parties supérieure et inférieure montrant chacune des zones déformables en compression, la partie inférieure pouvant être une pièce rapportée ou venue de matière avec la partie supérieure de la traverse.

La séparation de la traverse entre une zone rigide et une zone déformable en compression permet le contrôle de la transmission des efforts lors d'un choc latéral. La zone déformable en compression est disposée à proximité du longeron, elle comprend des moyens favorisant sa déformation en cas de choc latéral. La déformation de la zone déformable en compression permet de dissiper une partie des forces générées par un choc, offrant une protection aussi bien pour les passagers que pour la batterie de propulsion. La zone rigide constitue une zone de passage d'effort vers le côté opposé au choc.

Avantageusement, la partie surélevée du plancher comprenant au moins deux faces latérales ; la structure de soubassement est remarquable en ce qu'au moins une traverse est fixée aux faces latérales de la partie surélevée, et en ce que chaque zone déformable en compression de l'au moins une traverse s'étend entre un longeron et une face latérale de la partie surélevée, sur au moins 20% de la distance entre le longeron et la face latérale de la partie surélevée ; de préférence au moins 30% ; de préférence au moins 40%. Les dimensions de la zone déformable en compression permettent de modifier la quantité d'énergie pouvant être absorbée par déformation

La structure de soubassement comprend ainsi une ou plusieurs traverses en deux étages contournant la partie surélevée du plancher. La partie supérieure de la traverse peut être continue entre les longerons de manière transmettre les forces vers le côté opposé lors d'un choc latéral. La partie inférieure de chaque traverse est en appui sur le plancher sur deux faces latérales de la partie surélevée, formant des entretoises entre les longerons et chaque face latérale de la partie surélevée, permettant de limiter le déplacement des longerons vers le bloc de batterie en cas de choc latéral. La batterie est alors protégée en cas de choc latéral.

Les parties inférieures sont de préférences des pièces distinctes rapportées par soudage sur la partie supérieure. Cette solution offre plus de possibilités dans le choix des matériaux de manière à définir un comportement mécanique en cas de choc latéral distinct pour chaque partie de la traverse.

De préférence, les zones déformables en compression s'étendent dans une direction transversale de la structure de soubassement, sur des longueurs différentes dans la partie supérieure et dans la partie inférieure de la traverse.

Les zones déformable en compression viennent alors se chevaucher verticalement avec la zone rigide de manière à former une zone dite semi-rigide montrant localement des zones déformables en compression. De préférence, la zone semi-rigide s'étend sur au moins 5% de la distance entre le longeron et la paroi verticale de la partie surélevée ; de préférence au moins 10% ; de préférence au moins 20%.

De manière préférentielle, les parties supérieure et inférieure de la traverse sont formées par des profilés, la partie inférieure étant une pièce rapportée fixée à la partie supérieure de la traverse, et la partie supérieure comprend une paroi qui chevauche le profilé de la partie inférieure selon une direction longitudinale de la structure de soubassement. De préférence les parties supérieure et inférieure de la traverse sont formées par des profilés en U renversé ou en Ω.

De préférence, les parties inférieure et supérieure de la traverse étant formées par des profilés, la structure de soubassement est remarquable en ce que les zones rigide et déformable en compression des profilés de la traverse montrent des épaisseurs de matériaux différentes. De préférence la partie supérieure comprend un matériau plus épais que la partie inférieure dans les zones rigides et déformable en compression respectivement.

Les éléments de la traverse sont préférablement réalisés en acier. De préférence, la zone rigide est un acier qui montre un angle de pliage sous une charge maximale (bending angle at Fmax) ≥ 50 mesuré suivant le test de flexion VDA238-100 avec une épaisseur de référence de 1,50 mm, comme par exemple le matériau Usibor 1500P commercialisé par la compagnie AcerlorMittal. De préférence, la zone déformable en compression est un acier qui montre un angle de pliage sous une charge maximale (bending angle at Fmax) ≥ 90 mesuré suivant le test de flexion VDA238-100 avec une épaisseur de référence de 1,50 mm, comme par exemple le matériau Ductibor 500 commercialisé par la compagnie ArcelorMittal.

De préférence, l'épaisseur de l'acier pour les pièces profilées de la zone rigide peut être comprise entre 1,5 et 3,0 mm. Par exemple, l'épaisseur de l'acier dans la partie supérieure est d'au moins 1,8 mm ; de préférence d'au moins 2,0 mm ; et l'épaisseur de l'acier dans la partie inférieure est d'au moins 1,5 mm ; de préférence d'au moins 1,75 mm.

De préférence, l'épaisseur de l'acier pour les pièces profilées de la zone déformable peut être comprise entre 1,0 et 2,0 mm. Par exemple, l'épaisseur de l'acier dans la partie supérieure est d'au moins 1,3 mm ; de préférence d'au moins 1,4 mm ; et l'épaisseur de l'acier dans la partie inférieure est d'au moins 1,2 mm ; de préférence d'au moins 1,3 mm.

Avantageusement, les moyens favorisant la déformation en compression de chaque zone déformable comprennent au moins un des éléments suivants : des nuances de matériaux différentes des zones rigides, des épaisseurs de matériaux différentes des zones rigides, une ou plusieurs encoches, lumières, ondulations, ou nervures sur au moins une paroi de la traverse, ou une combinaison de ceux-ci.

Les moyens favorisant la déformation en compression de chaque zone déformable peuvent comprendre des formes particulières dans les profils de la traverse de manière à réduire la rigidité du profil dans la zone déformable, et à guider la déformation du profil dans une direction prédéfinie.

Par exemple, les pièces profilées comprennent une paroi avec un profil irrégulier réalisé par des ondulations et/ou nervures s'étendant transversalement à la direction principale de la pièce profilée.

Par exemple, les pièces profilées comprennent des lumières s'étendant dans la direction longitudinale et/ou verticale, de manière successive le long de la direction transversale. Avantageusement, la pièce profilée comprend au moins deux arêtes transversales, et les lumières d'étendent sur moins une des deux arêtes, préférentiellement sur les deux arêtes.

Par exemple, les lumières ont une dimension transversale de plus de 4 mm, préférentiellement de plus de 6 mm, encore plus préférentiellement de plus de 8 mm. De plus, chacune des lumières peut couvrir une surface comprise entre 40 mm² et 400 mm², préférentiellement entre 60 mm² et 300 mm².

Dans des modes de réalisation, la traverse est fixée aux longerons par sa partie supérieure ou sa partie inférieure.

Avantageusement, la partie supérieure et/ou la partie inférieure de la traverse comprend au moins une zone de passage pour un faisceau de câbles.

Selon un deuxième aspect, l'invention concerne un véhicule automobile électrique ou hybride électrique comprenant une structure de soubassement selon le premier aspect.

Avantageusement, la structure de soubassement du véhicule comprend au moins une traverse d'assise avant et une traverse d'assise arrière ; les traverses d'assise avant et arrière servant de support pour des glissières de siège avant du véhicule.

Selon un troisième aspect, l'invention concerne un procédé de fabrication d'une structure de soubassement selon le premier aspect, dans lequel la structure de soubassement comprend au moins deux longerons longitudinaux disposés respectivement de chaque côté de la structure de soubassement ; un plancher qui s'étend entre les deux longerons longitudinaux ; le plancher comprenant une partie surélevée, destinée à recevoir un bloc de batterie de propulsion ; la structure de soubassement comprenant en outre au moins une traverse disposée au-dessus du plancher , fixée aux longerons par ses extrémités ; le procédé comprenant une étape d'assemblage d'au moins une traverse par fixation de ses extrémités aux longerons.

Le procédé est remarquable en ce qu'il comprend en outre une étape préalable de formation d'au moins une traverse par assemblage de pièces ; de préférence par raboutage par soudure entre un profilé formant une zone rigide s'étendant transversalement sur au moins la largeur de la partie surélevée et des profilés formant des zones déformables en compression au niveau de chaque extrémité de la traverse.

D'autres particularités et caractéristiques de l'invention ressortiront de la description détaillée d'au moins un mode de réalisation avantageux présenté ci-dessous, à titre d'illustration, en se référant aux dessins annexés. Ceux-ci montrent :
[Fig. 1] la figure 1 est une vue en perspective d'un détail d'une structure de soubassement selon un mode de réalisation de l'invention ;
[Fig. 2] la figure 2 est une vue de face d'un détail montrant une traverse d'une structure de soubassement selon un mode de réalisation de l'invention ;
[Fig. 3] la figure 3 est une vue de face d'un détail montrant une traverse d'une structure de soubassement selon un autre mode de réalisation de l'invention.

Dans la suite de la description, le terme « comprendre » est synonyme de « inclure » et n'est pas limitatif en ce qu'il autorise la présence d'autres éléments dans le véhicule, ou de la structure de véhicule auquel il fait référence. Il est entendu que le terme « comprendre » inclut les termes « consister en ».

De même, les termes « inférieur », « supérieur », « haut » et « bas » s'entendront selon leur définition usuelle, dans laquelle les termes « inférieur » et « bas » indiquent une proximité avec le sol plus importante selon la direction verticale que respectivement les termes « supérieur » et « haut ».

Les termes « longitudinal », « transversal », « avant » et « arrière » s'entendront par rapport à l'orientation générale du véhicule tel que pris selon son sens normal de marche.

Par « profilé » on entendra un élément de forme allongé montrant un profil particulier selon sa section transversale. Les profilés peuvent être obtenus par pliage, emboutissage ou profilage d'une tôle ou de plusieurs tôles préalablement assemblées entre elles.

De tels flancs sont connus et disponibles commercialement, notamment auprès de la société ArcelorMittal^{®}. Il est également possible de produire des flancs de tôle composés de plusieurs tôles par des techniques dites de raboutage molette.

Dans la suite de la description, des éléments présentant une structure identique et/ou des fonctions analogues seront désignés par une même référence.

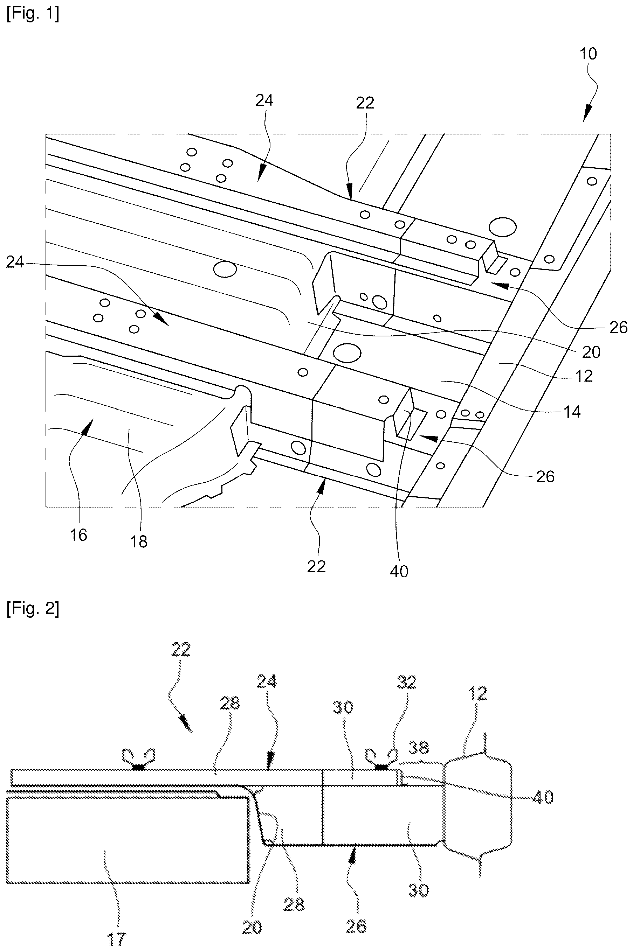

La figure 1 représente une vue partielle d'une structure de soubassement 10 selon un mode de réalisation de l'invention.

La structure de soubassement 10 comprend au moins deux longerons 12 longitudinaux disposés respectivement de chaque côté d'un plancher 14. Le plancher et les longerons sont assemblés fixement par soudage, par des moyens de serrage ou par tout moyen approprié. La vue de la figure 1 ne montre qu'un côté de la structure de soubassement et un seul longeron, l'autre côté étant symétrique par rapport à un plan vertical longitudinal.

En cas de choc latéral, ou choc poteau, les longerons sont conçus pour recevoir l'impact et à transmettre les forces sur les autres éléments de la structure de soubassement.

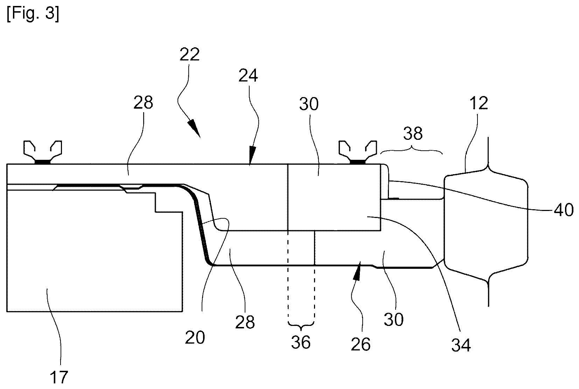

Le plancher 14 comprend une partie surélevée 16 sous laquelle est destiné à être monté un bloc de batterie 17 de propulsion, par exemple électrique, montré aux figures 2 et 3. Si les contraintes d'espace le permettent il est possible que la partie surélevée ait la hauteur du bloc de batterie de manière à ce que ce dernier soit entièrement agencé dans la partie surélevée sans ressortir vers le bas. La partie surélevée 16 peut être réalisé par une ou plusieurs pièces rapportées pliées ou moulées. Selon les variantes, la partie surélevée peut également être réalisé en une seule pièce avec les autres parties du plancher.

La partie surélevée 16 comprend une face supérieure 18 horizontale, et une pluralité de faces latérales sensiblement verticales s'étendant entre la face supérieure et le reste du plancher. La partie surélevée a une forme correspondant à la forme du bloc de batterie, comme par exemple une forme prismatique quelconque, ou une forme parallélépipédique. La partie surélevée est conçue manière à suivre le contour du bloc de batterie de propulsion avec un encombrement limité dans l'habitacle du véhicule.

La partie surélevée 16 comprend au moins deux faces latérales 20 qui sont en regard des longerons. Ces faces latérales 20 s'étendent de préférence dans la direction longitudinale de manière à être parallèles aux longerons. Une seule des faces latérales 20 est représentée sur la figure 1.

La structure de soubassement comprend en outre au moins une traverse 22 disposée au-dessus du plancher 14 et fixée aux longerons 12 par ses extrémités. La traverse 22 est fixée à chacune de ses extrémités à un longeron 12 respectif. La traverse 22 peut aussi être fixée aux deux faces latérales de la partie surélevée. La fixation de la traverse peut être réalisée par exemple par soudage.

La structure de soubassement 10 peut comprendre une ou plusieurs traverses selon l'agencement du véhicule. La structure de soubassement d'un véhicule automobile comprend communément deux traverses 22 dites d'assise, avec une traverse d'assise avant et une traverse d'assise arrière comme montrées à la figure 1. Les traverses avant et arrière peuvent servir de support pour des éléments du véhicule, comme par exemple pour des glissières de siège avant comme décrit plus bas.

La traverse 22 est un élément allongé de type poutre comme par exemple un profilé. De préférence, la traverse est un profilé creux en métal, par exemple en acier, formé par extrusion à chaud, ou par emboutissage. Le profil de la section du profilé peut varier sur la longueur de la traverse. L'homme du métier pourra choisir la section de profilé la mieux adaptée selon les besoins de fixation et les propriétés mécaniques recherchées, comme par exemple un profilé en U renversé ou en Ω.

Dans la suite de la description on s'attachera à la description d'une traverse étant entendu que d'autres traverses de la structure peuvent être identique ou comporter des différences structurelles. Des modes de réalisation de la traverse sont montrés sur les figures 1 à 3.

De manière à améliorer l'absorption d'un choc latéral, la traverse 22 comprend une zone rigide 28 s'étendant transversalement sur au moins la largeur de la partie surélevée 16 du plancher 14 et des zones déformables 30 en compression en cas de choc au niveau de chaque extrémité de la traverse 22. Chaque zone déformable 30 en compression comprend des moyens favorisant sa déformation progressive en compression qui seront décrit plus bas.

La zone déformable 30 s'étend entre le longeron 12 et une face latérale 20 de la partie surélevée 16 du plancher, de préférence sur au moins 20% de la distance entre le longeron et la face latérale 20 ; de préférence au moins 30% ; de préférence au moins 40%.

Dans la structure de soubassement 10, la traverse 22 comporte une partie supérieure 24, et une partie inférieure 26, les parties supérieure et inférieure montrant chacune des zones déformables 30 en compression, la partie inférieure étant disposée au niveau de chaque extrémité de la traverse

La zone rigide 28 de la traverse s'étend principalement dans la partie supérieure 24 de la traverse au-dessus du logement 16, mais peut aussi s'étendre partiellement dans la partie inférieure de la traverse 26.

La traverse 22 disposée au-dessus du plancher, et est rapportée d'une part sur les longerons 12 de la structure de soubassement et d'autre part sur les faces latérales de la partie surélevée 16. Les parties inférieures 26 de la traverse formant des entretoises entre les longerons 12 et les faces latérales 20, permettent aussi de limiter le déplacement des longerons vers le bloc de batterie en cas de choc latéral. La traverse peut être fixée aux longerons par sa partie supérieure et/ou sa partie inférieure. Pour une répartition des forces plus uniforme, la traverse est fixée aux longerons à la fois par ses parties inférieure et supérieure.

La traverse 22 peut être formée en une pièce monolithique dont les extrémités sont modifiées de manière à réaliser une partie inférieure et une partie supérieure, i.e. les parties supérieure et inférieure peuvent être intégrées en une seule pièce, autrement dit, elles peuvent être venues de matière.

De préférence, la traverse 22 peut comprendre deux éléments distincts liés fixement par soudage par fixation par vis, par encastrement ou par tout autre moyen approprié et formant respectivement la partie supérieure 24 et la partie inférieure 26 de la traverse. Les éléments sont par exemple des pièces profilées comme montrées à la figure 2, avec une section par exemple en Ω comprenant ainsi des pattes de fixation pour la fixation de la partie supérieure sur la partie inférieure, et de la partie inférieure sur le plancher.

Les parties supérieures et inférieures comprennent respectivement une zone rigide 28 et une zone déformable 30 formées par raboutages d'éléments de matériaux et/ou des nuances de matériaux différents, c'est-à-dire par soudage bout à bout de tôles.

La limite entre les zones rigide et déformable en compression est de préférence comprise dans un plan formé par les directions verticale et longitudinale. Comme on peut le voir à la figure 2, la limite entre les zones rigides 28 et déformable en compression 30 des parties supérieure 24 et inférieure 26 sont comprises dans le même plan. En vue de face cela se traduit par des zones déformables des deux parties de la traverse qui sont alignées verticalement.

Dans d'autres mode de réalisation, la limite entre les zones rigides 28 et déformable 30 sont formées par deux plans distincts pour les parties supérieures 24 et inférieures 26. En vue de face comme montrée à la figure 3, cela se traduit par des zones déformables des deux parties de la traverse qui ne sont pas alignées verticalement. Les zones déformables 30 de la partie supérieure 24 et de la partie inférieure 26 s'étendent alors transversalement sur des longueurs différentes. Ainsi la traverse comprend une zone intermédiaire semi-rigide 36 dans laquelle sont superposées verticalement, la zone rigide 28 de la partie inférieure 26, et la zone déformable 30 de la partie supérieure 24, formant un gradient de rigidité transversal, comme montré à la figure 3. Alternativement, la zone déformable de la partie supérieure se superpose à la zone rigide de la partie inférieure.

Les éléments formant les parties supérieure 24 et inférieure 26 peuvent être des profilés avec une section en U inversé ou en Ω. La partie supérieure 24 peut être un profilé avec une section qui comprend une paroi droite verticale 34 qui chevauche la partie inférieure selon une direction longitudinale de la structure de soubassement comme par exemple à la figure 3. La paroi qui chevauche la partie inférieure peut aussi former un angle avec la direction verticale.

Selon des variantes non montrées, la limite entre les zones rigide et déformable en compression n'est pas formée dans un plan vertical, par exemple cette limite peut être formée dans un plan formant un angle avec la direction verticale ou avoir un profil de forme quelconque.

Préférablement, les zones rigide et déformable en compression sont formées par des nuances de matériaux différentes et/ou par des épaisseurs de matériaux différentes.

Dans des modes de réalisation, l'épaisseur de l'acier pour les pièces profilées de la zone rigide peut être comprise entre 1,5 et 3 mm. Par exemple, l'épaisseur de l'acier dans la partie supérieure est d'au moins 1,8 mm ; de préférence d'au moins 2,0 mm ; de préférence de 2,0 mm. L'épaisseur de l'acier dans la partie inférieure est d'au moins 1,5 mm ; de préférence d'au moins 1,75 mm ; de préférence de 1,75 mm.

De préférence, l'épaisseur de l'acier pour les pièces profilées de la zone déformable peut être comprise entre 1,0 et 2,0 mm. Par exemple, l'épaisseur de l'acier dans la partie supérieure est d'au moins 1,3 mm ; de préférence d'au moins 1,4 mm ; de préférence de 1,4 mm et l'épaisseur de l'acier dans la partie inférieure est d'au moins 1,4 mm ; de préférence d'au moins 1,3 mm ; de préférence de 1,3 mm.

Comme montré aux figures 1 à 3, la partie supérieure de la traverse peut aussi comprendre une zone de passage 38 de faisceaux câbles ou d'autres éléments du véhicule. Cette zone peut aussi être prévue dans la partie inférieure de la traverse. Par exemple, la partie supérieure ou inférieure peut être raccourcie ou comporter des ouvertures de manière à former la zone de passage. La zone de passage de faisceaux de câbles est disposée de préférence dans une zone déformable car elle représente une zone de plus faible rigidité.

Comme montré aux figures 1 à 3, le profilé en U inversé de la partie supérieure comprend une languette 40 agencée dans un plan vertical-transversal dirigée vers le bas de manière à refermer la section longitudinale du profilé en U. Cette languette peut aussi être inclinée de manière à refermer progressivement la section du profilé.

La partie supérieure 24 de la traverse 22 peut aussi supporter des glissières 32 montrées aux figures 2 et 3 pour le montage de sièges avant, non montrés. Les glissières peuvent être montées dans des trous non montrés réalisés sur une paroi supérieure de la traverse ou par l'intermédiaire d'une pièce supplémentaire.

La structure de soubassement décrit ci-dessus peut être utilisée pour équiper un véhicule comme par exemple un véhicule automobile électrique ou hybride électrique.

L'invention concerne également un procédé de fabrication d'une structure de soubassement telle que décrite plus haut, dans lequel la structure de soubassement comprend au moins deux longerons 12 longitudinaux disposés respectivement de chaque côté de la structure de soubassement ; un plancher 14 qui s'étend entre les deux longerons 12 longitudinaux ; le plancher comprenant une partie surélevée 16, sous laquelle est destiné à être monté un bloc de batterie 17 de propulsion ; la structure de soubassement comprenant en outre au moins une traverse 22 disposée au-dessus du plancher 14, fixée aux longerons 12 par ses extrémités ; et comprenant une zone rigide 28 s'étendant transversalement sur au moins la largeur de la partie surélevée 16 ; et des zones déformables 30 en compression au niveau de chaque extrémité de la traverse.

Le procédé comprend une étape d'assemblage d'au moins une traverse par fixation de ses extrémités aux longerons.

Le procédé comprend en outre une étape préalable de formation d'au moins une traverse 22 par assemblage de pièces métalliques. L'assemblage peut être réalisé par raboutage, par exemple par soudure entre un profilé formant la zone rigide et des profilés formant les zones d'absorption d'énergie.

## Revendications

1. Structure de soubassement (10) pour un véhicule automobile, la structure de soubassement comprenant un plancher (14), et au moins deux longerons (12) longitudinaux disposés respectivement de chaque côté du plancher (14) ; le plancher comprenant une partie surélevée (16) sous laquelle est destiné à être monté un bloc de batterie (17) de propulsion ; la structure de soubassement comprenant en outre au moins une traverse (22) disposée au-dessus du plancher (14), et fixée aux longerons (12) par ses extrémités ; au moins une traverse comprend une zone rigide (28) s'étendant transversalement sur au moins la largeur de la partie surélevée (16) du plancher ; et des zones déformables (30) en compression en cas de choc au niveau de chaque extrémité de la traverse, chaque zone déformable (30) en compression comprenant des moyens favorisant sa déformation ; la structure de soubassement est **caractérisée en ce qu'**au moins une traverse (22) comprend une partie supérieure (24) s'étendant au-dessus de la partie surélevée (16), et une partie inférieure (26) disposée au niveau de chaque extrémités de la traverse, les parties supérieure et inférieure montrant chacune les zones déformables (30) en compression, la partie inférieure pouvant être une pièce rapportée ou venue de matière avec la partie supérieure de la traverse.

2. Structure de soubassement selon la revendication 1, la partie surélevée (16) du plancher comprenant au moins deux faces latérales (20) ; la structure de soubassement est **caractérisée en ce qu'**au moins une traverse est fixée aux faces latérales de la partie surélevée, et **en ce que** chaque zone déformable (30) en compression de l'au moins une traverse s'étend entre un longeron (12) et une face latérale (20) de la partie surélevée, sur au moins 20% de la distance entre le longeron et la face latérale de la partie surélevée.

3. Structure de soubassement (10) selon l'une des revendications précédentes, **caractérisée en ce que** les zones déformables (30) en compression s'étendent dans une direction transversale de la structure de soubassement, sur des longueurs différentes dans la partie supérieure (24) et dans la partie inférieure (26) de la traverse,

4. Structure de soubassement (10) selon l'une quelconque des revendications 1 ou 3, **caractérisée en ce que** les parties supérieure et inférieure de la traverse sont formées par des profilés, la partie inférieure (26) étant une pièce rapportée fixée à la partie supérieure (24) de la traverse, et la partie supérieure comprend une paroi (34) qui chevauche le profilé de la partie inférieure (26) selon une direction longitudinale de la structure de soubassement ; de préférence les parties supérieure et inférieure de la traverse sont formées par des profilés en U renversé ou en Ω.

5. Structure de soubassement (10) selon l'une quelconque des revendications 1 à 4, les parties inférieure (26) et supérieure (24) de la traverse étant formées par des profilés, la structure de soubassement est **caractérisée en ce que** les zones rigide (28) et déformable (30) en compression des profilés de la traverse (22) montrent des épaisseurs de matériaux différentes ; de préférence la partie supérieure comprend un matériau plus épais que la partie inférieure dans les zones rigides et déformable en compression respectivement.

6. Structure de soubassement (10) selon l'une quelconque des revendications 1 à 5, **caractérisée en ce que** la partie supérieure (24) et/ou la partie inférieure (26) de la traverse comprend au moins une zone de passage (38) pour un faisceau de câbles.

7. Structure de soubassement (10) selon l'une quelconque des revendications 1 à 6, **caractérisée en ce que** les moyens favorisant la déformation en compression de chaque zone déformable (30) comprennent au moins un des éléments suivants : des nuances de matériaux différentes par rapport aux zones rigides, des épaisseurs de matériaux différentes par rapport aux zones rigides, une ou plusieurs encoches, lumières, ondulations, ou nervures sur au moins une paroi de la traverse, ou une combinaison de ceux-ci.

8. Véhicule automobile électrique ou hybride électrique comprenant une structure de soubassement selon l'une quelconque des revendications précédentes.

9. Procédé de fabrication d'une structure de soubassement selon l'une quelconque des revendication 1 à 7, dans lequel la structure de soubassement comprend au moins deux longerons (12) longitudinaux disposés respectivement de chaque côté de la structure de soubassement ; un plancher (14) qui s'étend entre les deux longerons (12) longitudinaux ; le plancher comprenant une partie surélevée (16), destinée à recevoir un bloc de batterie (17) de propulsion ; la structure de soubassement comprenant en outre au moins une traverse (22) disposée au-dessus du plancher (14), fixée aux longerons (12) par ses extrémités ; au moins une traverse (22) comprend une partie supérieure (24) s'étendant au-dessus de la partie surélevée (16), et une partie inférieure (26) disposée au niveau de chaque extrémités de la traverse, les parties supérieure et inférieure montrant chacune des zones déformables (30) en compression, la partie inférieure pouvant être une pièce rapportée ou venue de matière avec la partie supérieure de la traverse; procédé comprenant une étape d'assemblage d'au moins une traverse par fixation de ses extrémités aux longerons ; le procédé est **caractérisé en ce qu'**il comprend en outre une étape préalable de formation d'au moins une traverse (22) par assemblage de pièces ; de préférence par raboutage par soudure entre un profilé formant une zone rigide (28) s'étendant transversalement sur au moins la largeur de la partie surélevée (16) et des profilés formant les zones déformables (30) en compression au niveau de chaque extrémité de la traverse.

## Patentansprüche

1. Untergestellstruktur (10) für ein Kraftfahrzeug, wobei die Untergestellstruktur einen Boden (14) und wenigstens zwei Längsholme (12) aufweist, die jeweils auf jeder Seite des Bodens (14) angeordnet sind; wobei der Boden einen erhabenen Abschnitt (16) aufweist, unter dem ein Antriebsbatterieblock (17) montiert werden soll; wobei die Untergestellstruktur ferner wenigstens eine Traverse (22) aufweist, die über dem Boden (14) angeordnet und an wenigstens einem Ende an den Holmen (12) befestigt ist; Querträger mit einem starren Bereich (28), der sich quer über mindestens die Breite des erhabenen Bodenabschnitts (16) erstreckt; und verformbaren Bereichen (30), die bei einem Aufprall an jedem Ende des Querträgers zusammengedrückt werden, wobei jeder verformbare Bereich (30) beim Zusammenprall Mittel zur Förderung seiner Verformung umfasst; wobei die Unterkonstruktion **dadurch gekennzeichnet ist, dass** mindestens ein Querträger (22) einen oberen Bereich (24), der sich über den erhabenen Bereich (16) erstreckt, und einen unteren Bereich (26), der an jedem Ende des Querträgers angeordnet ist, umfasst Ober- und Unterseite, die jeweils die verformbaren Bereiche (30) unter Kompression aufweisen, wobei das Unterteil als ein einstückiges Teil mit dem Oberteil des Querträgers ausgebildet sein kann.

2. Unterkonstruktion nach Anspruch 1, wobei der erhabene Teil (16) des Bodens wenigstens zwei Seitenflächen (20) aufweist; wobei die Unterkonstruktion **dadurch gekennzeichnet ist, dass** wenigstens eine Traverse an den Seitenflächen des erhabenen Teils befestigt ist, und dass sich jede verformbare Druckzone (30) der wenigstens einen Traverse zwischen einem Längsträger (12) und einer Seitenfläche (20) des erhabenen Teils über wenigstens 20% des Abstands zwischen dem Längsträger und der Seitenfläche des erhabenen Teils erstreckt.

3. Untergestellstruktur (10) nach einem der vorhergehenden Ansprüche, **dadurch gekennzeichnet, dass** sich die verformbaren Druckbereiche (30) in einer Querrichtung der Untergestellstruktur über unterschiedliche Längen im oberen Teil (24) und im unteren Teil (26) des Querträgers erstrecken.

4. Unterkonstruktion (10) nach einem der Ansprüche 1 oder 3, **dadurch gekennzeichnet, dass** der obere und der untere Teil des Querträgers durch Profile gebildet sind, wobei der untere Teil (26) ein an dem oberen Teil (24) des Querträgers befestigter Einsatz ist, und der obere Teil eine Wand (34) aufweist, die das Profil des unteren Teils (26) in einer Längsrichtung der Unterkonstruktion überlappt; vorzugsweise sind der obere und der untere Teil des Querträgers durch umgekehrte U- oder Ω-Profile gebildet.

5. Unterkonstruktion (10) nach einem der Ansprüche 1 bis 4, wobei das Unterteil (26) und das Oberteil (24) des Querträgers durch Profile gebildet sind, wobei die Unterkonstruktion **dadurch gekennzeichnet ist, dass** die steifen (28) und verformbaren (30) komprimierbaren Bereiche der Profile des Querträgers (22) unterschiedliche Materialdicken aufweisen; wobei vorzugsweise das Oberteil ein Material aufweist, das dicker als das Unterteil in den steifen bzw. verformbaren komprimierbaren Bereichen ist.

6. Unterkonstruktion (10) nach einem der Ansprüche 1 bis 5, **dadurch gekennzeichnet, dass** das Oberteil (24) und/oder das Unterteil (26) des Querträgers mindestens einen Durchgangsbereich (38) für ein Kabelbündel aufweist.

7. Untergestellstruktur (10) nach einem der Ansprüche 1 bis 6, **dadurch gekennzeichnet, dass** die Mittel zur Förderung der Druckverformung jeder verformbaren Zone (30) mindestens eines der folgenden Elemente umfassen: andere Materialschattierungen in Bezug auf die starren Zonen, andere Materialdicken in Bezug auf die starren Zonen, eine oder mehrere Kerben, Lüftungsschlitze, Wellungen oder Rippen an mindestens einer Wand des Querträgers oder eine Kombination davon.

8. Elektrisches oder elektrisches Hybrid-Kraftfahrzeug, das eine Unterkonstruktion nach einem der vorhergehenden Ansprüche umfasst.

9. Verfahren zur Herstellung einer Unterlagestruktur nach einem der Ansprüche 1 bis 7, wobei die Unterlagestruktur mindestens zwei Längsholme (12), die jeweils auf jeder Seite der Unterlagestruktur angeordnet sind, einen Boden (14), der sich zwischen den beiden Längsholmen (12) erstreckt, umfasst; wobei der Boden einen erhöhten Abschnitt (16) zur Aufnahme eines Antriebsbatterieblocks (17) umfasst; wobei die Unterlagestruktur ferner mindestens einen Querträger (22) umfasst, der über dem Boden angeordnet ist (14), der an den Längsträgern (12) an seinen Enden befestigt ist; mindestens ein Querträger (22) umfasst einen oberen Abschnitt (24), der sich über den erhöhten Abschnitt (16) erstreckt, und einen unteren Abschnitt (26), der an jedem Ende des Querträgers angeordnet ist, wobei der obere und der untere Abschnitt jeweils verformbare Bereiche (30) unter Druck aufweisen, wobei der untere Abschnitt ein eingesetzter oder einstückiger Teil mit dem oberen Abschnitt des Querträgers sein kann; wobei das Verfahren einen Schritt des Zusammenbaus mindestens eines Querträgers durch Befestigen seiner Enden an den Längsträgern umfasst; das Verfahren **dadurch gekennzeichnet, dass** es ist, dass Zusätzlich zu einem vorherigen Schritt der Bildung mindestens eines Querträgers (22) durch Zusammenfügen von Teilen, vorzugsweise durch Hobeln durch Schweißen zwischen einem Profil, das einen starren Bereich (28) bildet, der sich quer über mindestens die Breite des erhabenen Teils (16) erstreckt, und Profilen, die die verformbaren Bereiche (30) in Kompression an jedem Ende des Querträgers bilden.

## Claims

1. Underbody structure (10) for a motor vehicle, the underbody structure comprising a floor (14), and at least two longitudinal spars (12) arranged respectively on either side of the floor (14); the floor comprising a raised part (16) under which a propulsion battery pack (17) is intended to be mounted; the underbody structure further comprising at least one cross member (22) arranged above the floor (14), and fixed to the spars (12) by its ends; at least one cross member comprises a rigid zone (28) extending transversely over at least the width of the raised part (16) of the floor; and deformable zones (30) in compression in the event of an impact at the level of each end of the cross member, each deformable zone comprising means for promoting compression the substructure is **characterised in that** at least one cross-member (22) comprises an upper part (24) extending above the raised part (16), and a lower part (26) disposed at the level of each end of the cross-member, the upper and lower parts each showing the deformable zones (30) in compression, the lower part being able to be an added or integral component with the upper part of the cross-member.

2. Underbody structure according to Claim 1, the raised part (16) of the floor comprising at least two lateral faces (20); the underbody structure is **characterised in that** at least one cross-member is fixed to the lateral faces of the raised part, and **in that** each deformable zone (30) in compression of the at least one cross-member extends between a spar (12) and a lateral face (20) of the raised part, over at least 20% of the distance between the spar and the lateral face of the raised part.

3. Underbody structure (10) according to one of the previous claims, wherein the deformable zones (30) in compression extend in a transverse management of the underbody structure, over different lengths in the upper part (24) and in the lower part (26) of the cross-member,

4. Underbody structure (10) according to any one of Claims 1 or 3, wherein the upper and lower parts of the cross-member are shaped by profiles, the lower part (26) being an attached component fixed to the upper part (24) of the cross-member, and the upper part comprises a wall (34) which overlaps the profile of the lower part (26) along a longitudinal management of the underbody structure; preferably the upper and lower parts of the cross-member are shaped by inverted U-shaped or Ω.-shaped profiles

5. Underbody structure (10) according to any one of Claims 1 to 4, the lower (26) and upper (24) parts of the cross-member being shaped by sections, the underbody structure is **characterised in that** the rigid (28) and deformable (30) zones in compression of the sections of the cross-member (22) show different thicknesses of materials; preferably the upper part comprises a material thicker than the lower part in the rigid zones and deformable in compression respectively.

6. Underbody structure (10) according to any one of Claims 1 to 5, **characterised in that** the upper part (24) and/or the lower part (26) of the cross-member comprises at least one passage zone (38) for a cable harness.

7. Underbody structure (10) according to any one of Claims 1 to 6, **characterised in that** the means favouring the deformation in compression of each deformable zone (30) comprise at least one of the following items: different grades of materials by report to the rigid zones, different thicknesses of materials by report to the rigid zones, one or more notches, slots, corrugations, or ribs on at least one wall of the crossmember, or a combination thereof.

8. Electric or hybrid electric motor vehicle comprising a substructure according to any one of the previous claims.

9. Process for manufacturing a substructure according to any one of Claims 1 to 7, wherein the substructure comprises at least two longitudinal spars (12) arranged respectively on either side of the substructure; a floor (14) which extends between the two longitudinal spars (12); the floor comprising a raised part (16), intended for a propulsion battery pack (17); the substructure further comprising at least one cross-member (22) arranged above the floor (14), fixed to the spars (12) by its ends; at least one cross-member (22) comprises an upper part (24) extending above the raised part (16), and a lower part (26) arranged at the upper level of the cross-member, and lower showing each of the deformable zones (30) in compression, the lower part being able to be an added or integral component with the upper part of the cross-member; the method comprising a step of assembling at least one cross-member by fixing its ends to the side members; the method is **characterised in that** it further comprises a prior step of training of at least one cross-member (22) by assembling components; preferably by butt-welding between a section forming a rigid zone (28) extending transversely over at least the width of the raised part (16) and sections forming the deformable zones (30) in compression at the level of each end of the cross-member.
